Europäisches Patentamt

(19) European Patent Office

Office européen des brevets

(11) Publication number: **0 060 902**
**B1**

(12) **EUROPEAN PATENT SPECIFICATION**

(45) Date of publication of patent specification: **24.06.87**

(21) Application number: **81102061.9**

(22) Date of filing: **19.03.81**

(51) Int. Cl.⁴: **B 09 B 1/00,** C 04 B 18/06,
E 21 F 15/00, E 02 D 17/18

(54) **A method of filling with simultaneous packing superficial storage yards with waste materials from power plants, thermal-electric power stations and heating plants.**

(43) Date of publication of application:
**29.09.82 Bulletin 82/39**

(45) Publication of the grant of the patent:
**24.06.87 Bulletin 87/26**

(84) Designated Contracting States:
**AT BE CH DE FR GB IT LI LU NL SE**

(56) References cited:
**DE-A-2 724 599**
**GB-A-1 439 938**
**LU-A- 80 056**
**US-A-4 028 130**

**Extract from a book by Milentiev W. A., Nagli H. Z. Gidvozolondaleniyen i zolostwaly, Leningrad, 1968**

**"Ash Handling, storage and utilization" by W. Z. Loftus, Proceedings of the American Power Conference, 1976, vol. 38**

**"Ash disposal in drums, mounds, structural fills, and retaining walls" by D. William Lamb, Proceedings of the third Ash Utilisation Symposium, Pittsburgh, PS, March 13-14, 1973**

(73) Proprietor: **Poludniowy Okreg Energetyczny**
**ul. Jordana 25**
**40-952 Katowice (PL)**

(72) Inventor: **Kmiecik, Jerzy**
**ul. Chrobrego 13/21**
**Katowice (PL)**
Inventor: **Rokita, Jerzy**
**ul. Kosciuszki 16/5**
**Gliwice (PL)**
Inventor: **Szubra, Jan**
**ul. Broniewskiego 15/5**
**Katowice (PL)**
Inventor: **Tomaszewski, Slawomir**
**ul. Uniwersytecka 29/32**
**Katowice (PL)**
Inventor: **Wilgusiewicz, Wladyslaw**
**ul. Swierczewskiego 67**
**Zabrze (PL)**

(74) Representative: **Hansen, Bernd, Dr.rer.nat. et al**
**Hoffmann, Eitle & Partner Patentanwälte**
**Arabellastrasse 4 Postfach 81 04 20**
**D-8000 München 81 (DE)**

Courier Press, Leamington Spa, England.

## Description

The subject of the invention is a method of filling with simultaneous sealing of surface storage yards with furnace wastes from power plants, thermal-electric power stations and heating plants by placing fly ash and water onto the base of such surface storage yards and distributing them uniformly.

There is known and applied a method of storing furnace waste materials carried away to a storage yard in form of a mixture of ashes and slags with a large amount of water. Said method is described in technical literature, e.g. in the book of Milentiew W.A., Nagli H. Z. Gidrozoloudalenije i zolootwaly, Leningrad, 1968.

The method is performed in that the waste materials in form of a mixture of ashes and slags with a large amount of water, after being hydraulically conveyed through pipelines to an open under-level or over-level storage yard of a large area, are stored in separated sections of the storage yard, being exploited in turns in a three-field-rotation system (storing, drying and preparing for repeated storing). Over-deposit water of a working section after preliminary sedimentation is drained off from the storage yard thorugh a system of overflow wells to settling tanks, and then after clarifying it is carried to a power plant, a thermal-electric power station or a heating plant by means of a separate system of pumps and pipelines of return water, for repeated utilization at transporting the waste materials to the storage yard.

There is also known and applied a method of storing furnace waste materials being in form of a dry or wetted mass. It is described in technical literature, e.g. in the publication: W. E. Loftus, "Ash handling, storage and utilization", Proceedings of the American Power Conference, 1976, vol. 38, or D. William Lamb, "Ash disposal in dams, mounds, structural fills, and retaining walls", Proceedings of the Third Ash Utilization Symposium, Pittsburgh, Ps., March 13—14, 1973. This method consists in that fly ashes, either dry or wetted with water, after being transported to the storage yard by means of mechanical devices or wheeled vehicles, are distributed over the storage yard by means of standard devices for displacement of soil, and are thickened by means of vibratory rolls. The shape of storage yard thus creatd as well as their spatial form are adapted to environmental conditions, with respect to later purposes of the area and to the requirements imposed by the reasons of the environmental protection. The precharacterising past of claim 1 is based on this disclosure.

The main drawback of the first of the above mentioned method is: a large amount of contaminated and highly mineralized water is carried away to the storage yard, which causes infiltration of a considerable amount of this water through the basement soil and the side-space of the storage yard to underground waters, as well as water hazards for objects in the vicinity of the storage yard, the necessity of embankments to be made according to requirements for objects of hydraulic engineering, and the application of expensive methods of sealing the side space of the storage yard against infiltration of waters, secondary dusting of dewatered surfaces of the storage yard, a long period of stabilization and expensive recultivation for restoring the useful values of the area of the storage yard after its filling, and the necessity of building and operating expensive objects used for clarification and pumping of return water from the storage yard.

The main drawback of the second of the above mentioned method is high labour consumption in dislocation and thickening of the stored mass, technical difficulties in arranging it to a required spatial form, and expensive transport of furnace waste materials, as well as expensive protection of the storage yard against secondary dusting.

In LU—A—80056 the sealing surface of the storage yard is made of hydraulic mortar being a suspension of after-reaction wastes of a soda factory with an additon of fly ash, but with a prevailing amount of wastes. Also, above document does not disclose that said suspension will solidify and form a solid body.

US—4,028,130 concerns solidification of slurries from sewage treatment plants by adding lime and fly ashes as well as some other binding substances. Thus, according to above US—PS it is obligatory to add lime and other binding substances; in this process the addition of fly ash is only considered as a further component in a multi-component mixture.

GB—A—1,439,938 describes the storing of fly ashes in form of a dewatered mixture of solid components, wherein the weight ratio of fly has to water is 78:22. It is obvious that said mixture will not be liquid, and additional devices and operations will be required to distribute said mixture over the surface of the storage yard. Said mixture will not solidify into a non-permeable or non-dusting mass. As one possible spreading operation it is described to convey the suspension of ash in water with a weight ratio of 55:45 by means of a suitable piping. Then, after being conveyed the mixture is dewatered and a non-liquid mixture is obtained with a 80:20 weight ration of ash to water. Due to the dewatering of above mixture, the binding substances initially contained in the fly ash and then dissolved in the water, will be removed. It is quite obvious that due to the above dewatering step, which removed binding substances contained in the fly ash, said suspension will not solidify. DE—A—27 24 599 describes also a method for the preparation of a mass which is used as filling of mine workings. According to this process a mixture of fly as, lime and water is prepared. Also in this case lime is used as a compulsory component, thus differing from the process of the present application.

The object of the invention is to design a method of storing waste materials from power plants, thermal-electric power stations and heating plants, which enables simultaneous sealing of the basement soil and the side-space of the storage yard. This task is achieved as a result of forming at the storage yard a mass characterized by small permeability and the lack of dusting.

The essence of the invention is defined in the claims 1 and 2 and consists in applying for the purpose of sealing and filling of the storage yard a suspension of fly ashes in water of a high concentration at a weight ratio of at least 1:1, and preferably 2.5:1 or a mixture of this suspension with preferably an addition of power-industry slags or other solid waste materials, at an amount of up to 20% of the mass of the suspension.

The suspension or mixture is conveyed to the storage yard by a pipeline and is uniformly spread on its area. In the first stage of filling the storage yard the suspension infiltrates into all slots and crack of soil or formation. The suspension petrifies into a mass of slight permeability.

The method of storing with sealing according to the invetion enables complete utilization for solidifying and petrification processes, a suspension of fly ashes in water, the natural binding properties of fly ashes, said properties resulting from the content of pozzolana and active calcium oxide (CaO), as well as magnesium oxide (MgO) present in all ashes. Binding properties of ashes are fully utilized for the process of solidifying and petrification only at the weight ratio of ashes to water reachng more than 1:1 due to chemical binding of water and thereby obtained hydrated clacium and magnesium aluminosilicates. The excess of water remained in this process and contained in the suspension constitutes—after the end of this process a wetting of the petrified mass of ashes similar to or lower than the natural hygroscopic humidity of soil.

The course and speed of solidification and petrification of ashes depends on the concentration of the suspension and on the outer atmospheric conditions and it lasts up to about 10 days, and after that time, the permeability of the petrified mass is not bigger than $10^{-7}$ cm/s.

The process of petrification continues and after about 1 year the permeability of the petrified mass decreases several times. The process of solidification and petrification of the suspension can be accelerated by addition of known chemical substances at an amount of up to 7% of the mass of the suspension, those additions being such as slaked lime, hydrated lime or burnt lime, hydrated aluminium sulphate $Al_2(SO510)_3 \cdot 18\ H_2O$, hydrated calcium nitrate $Ca(NO_3)_2 \cdot H_2O$, potassium nitrate $KNO_3$, sodium sulphate $Na_2SO_4$, potassium sulphate $K_2SO_4$, hydrated calcium chloride $CaCl_2 \cdot 2\ H_2O$. Said addition can be proportioned at the place where the suspension is prepared or at the place where it is introduced into the storage yard.

At filling of the storage yard with a suspension of fly-ashes in water of a high concentration or with their mixture with power-industry slags or other solid waste materials, the process of sealing of the basement soil and of the side-space proceeds in the whole mass of introduced suspension.

The advantage of the method of storing with simultaneous sealing according to the invention is protection of water resources, mining works, underground objects and arable land from infiltration of water containing impurities washed out of ashes, slags and other furnace waste materials into soil. Another advantage of the method according to the invention also consists in the possibility and remunerativeness of filling of storage yard of small capacities and areas, a possibility of storing the waste materials to a considerable height over the level of the ground, low cost of storage and possibility of handing over area after finishing of storage for economically usefull purposes, without a necessity of performing and procedures protecting against secondary dusting.

**Claims**

1. A method of filling with sumultaneous sealing of surface storage yards with furnace wastes from power plants, thermal-electric power stations and heating plants by placing fly ash and water onto the base of such surface storage yards and distributing them uniformly, characterised in that a liquid fly ash-water suspension is automatically spread over the surface storage yard, said suspension having a weight ratio of fly ash to water of at least 1:1, preferably 2.5:1, and in that said suspension is conditioned on the surface storage yard for about 10 days until it has solidified.

2. Method as per claim 1, characterized in that slags and other solid wates from power plants are added to the suspension in the amount of up to 20% related to the weight of the suspension.

**Patentansprüche**

1. Verfahren zum Füllen und gleichzeitigen Abdichten von Übertragedeponien mit Rückstandsmaterial von Kraftwerken, tehrmo-electrischen Kraftwerken und Heizwerken, indem man Flugasche und Wasser auf den Boden dieser Übertragedeponien gibt und gleichmäßig verteilt, dadurch gekennzeichnet, daß eine flüssige Flugashe-Wasser-Suspension automatisch auf der Übertragedeponie ausgebreitet wird, wobei diese Suspension ein Gewichtsverhältnis von Flugasche zu Wasser von mindestens 1:1, vorsugsweise 2.5:1 aufweist, und die genannte Suspension auf der Übertragedeponie ca. 10 Tage lang bis zu deren Verfestigung konditioniert wird.

2. Verfahren nach Anspruch 1, dadurch gekennzeichnet, daß Schlacken und andere feste Rückstände aus Kraft werken zu der Suspension in einer Menge bis zu 20%, bezogen auf das Gewicht der Suspension, zugegeben werden.

**Revendications**

1. Un procédé de remblayage avec étanchéification simultanée d'aires de stockage à ciel ouvert avec des résidus de fours de centrales d'énergie, de centrales thermo-électriques et de centrales de chauffage, consistant à placer de la cendre volante et de l'eau sur le fond de l'aire de stockage à ciel ouvert et à les distribuer uniformément, caractérisé en ce que l'on éale automatiquement une suspension liquide de cendre volante et d'eau sur l'aire de stockage à ciel ouvert, ladite suspension ayant un rapport pondéral de la cendre volante à l'eau d'au moins 1:1, de préférence de 2,5:1, et en ce que ladite suspension est conditionée sur l'aire de stockage à ciel ouvert pendant environ 10 hours jusqu'à ce qu'elle se soit solidifiée.

2. Procédé selon la revendication 1, caractérisé en ce que l'on ajoute à la suspension de scories et d'autres résidus solides de centrales d'énergie en quantité allant jusqu'a à 20%, par rapport au poids de la suspension.